# EUROPÄISCHE PATENTSCHRIFT

(11) **EP 0 341 618 B1**
(45) Veröffentlichungstag und Bekanntmachung des Hinweises auf die Patenterteilung: **22.06.1994**
(21) Anmeldenummer: 89108209.1
(22) Anmeldetag: 06.05.1989
(51) Int. Cl.: B29C 47/70, B29C 47/26, B01F 5/06

(54) **Verfahren zur gleichzeitigen Herstellung von Vorformlingen**
Method for the simultaneous manufacture of a plurality of preforms
Procédé pour la fabrication simultanée d'une pluralité de préformes

(30) Priorität: 11.05.1988 DE 3816188
(43) Veröffentlichungstag der Anmeldung: 15.11.1989
(73) Patentinhaber: Otto Hofstetter AG, 8730 Uznach (CH)
(72) Erfinder: Fernandez, Luis, CH-8730 Uznach (CH); Hofstetter, Otto, CH-8730 Uznach (CH)
(74) Vertreter: Seifert, Helmut E.

(56) Entgegenhaltungen:
- EP-A- 0 154 013
- EP-A- 0 293 756
- DE-A- 2 461 340
- DE-A- 2 847 627
- FR-A- 2 163 459
- GB-A- 1 340 913
- US-A- 4 073 479

## Beschreibung

Die vorliegende Erfindung betrifft ein Verfahren gemäss Oberbegriff des Patentanspruchs 1, einen Leitungsabschnitt für die gezielte Beeinflussung der Strömung eines flüssigen oder viskösen Gutes gemäss Oberbegriff des Anspruchs 6, einen Einsatzteil gemäss Oberbegriff des Anspruchs 9 , sowie einen Heissläuferblock gemäss Oberbegriff des Anspruchs 11.

Bei der Herstellung von Vorformlingen aus Kunststoff und insbesondere aus PET-Material (poly-ethlene-terephthalate) muss die Temperatur des vorgeförderten und in die Vorformlingsformen gespritzten Materials innerhalb eines relativ schmalen Temperaturbereiches liegen (s. A. Layman's Guide to PET Chemistry and Processing; Edward E. Denison, Eastman Chemical Products, Inc., Presented at the 4th Annual International Conference on Oriented Plastic Containers, March 25, 1981).
Liegt die Temperatur zu tief, so ist der kristalline Anteil im Material zu hoch. Anzustreben ist, das gesamte Material möglichst in amorphen Zustand überzuführen.

Liegt anderseits die Temperatur zu hoch, was den verbleibenden kristallinen Anteil verringern würde, so wird zuviel Acetaldehyd im Material gebildet, welches bekanntlich ein Geschmacksstoff ist, der sich bereits in sehr geringen Anteilen geschmacklich auf ein Füllgut auswirken kann, welches in aus den hergestellten Vorformlingen nachmals blasgereckten Flaschen bzw. Behälter eingefüllt wird.

Deshalb ist einerseits eine vollständige Vermeidung kristalliner Anteile im in die Vorformlingsformen gespritzten PET-Material nicht möglich. Werden aber Materialanteile mit lokal erhöhtem kristallinen Anteil in die Vorformlingsformen gespritzt, so kann dies an den Vorformlingen zu opaken Schlieren führen, denn PET-Material mit erhöhtem kristallinen Anteil, dessen Kristallstrukturen lediglich unter Wärmeeinfluss entstanden, ist opak. Die Schlierenbildung ist bei bekannnten Herstellungsverfahren ein Problem, welches, wie erwähnt, nicht einfach durch Temperaturerhöhung gelöst werden kann. Bezüglich bekannter Mischer wird hingewiesen auf: US-A Nr. 3 404 869, 2 511 291, 4 692 030, 4 049 241, DE-OS 3 026 039, GB-A 1 340 913, CH-A 615 113. Auf Probleme der geschilderten Art beziet sich die US-A Nr. 5'6056 und die am 7.12.88 veröffentlichte EP-A 0 293 756.

Insbesondere wird in der GB-A 1'340'913 ein Förderelement offenbart, dessen Querschnitt an aufeinanderfolgenden Stellen in unterschiedliche Richtungen abgeplattet ist. Dieses Element ist nicht imstande Material, welches in der Strömungsmitte fliesst in die Randbereiche zu fördern und umgekehrt, und eignet sich damit nicht für die Durchmischung von schlecht wärmeleitenden PET-Material.

In der gattungsbildenden DE-A-2461340 werden Einsätze zum Wenden des Materialsstroms offenbart. Durch diese Einsätze wird der Materialstrom im wesentlichen um seine Längsachse um 180 Grad gedreht und eignet sich nicht für eine Durchmischung resp. Temperaturhomogenisierung des Materialstroms.

Die Lösung obengenannten Problems, Aufgabe der vorliegenden Erfindung , ergibt sich nach dem Wortlaut des Anspruchs 1; Durch die Durchmischung und Temperaturhomogenisierung wird generell eine Homogenisierung des kristallinen Anteils in dem den Kavitäten zugeführten Materal erreicht, womit die erwähnte Bildung opaker Schlieren verhindert wird.

Wie aus dem vorgängig Erläuterten hervorgeht, ist das zweite Problem bei der gleichzeitigen Herstellung von Vorformlingen aus einem PET-Material das Acetaldehyd. Als Wärmequelle während der Durchleitung des viskösen Materials von einer Extrusionsschnecke bis zu den Formlingskavitäten ist vornehmlich die Materialverteilung im Heissläuferblock zu betrachten. Das Material fliesst in einem Verteilleitungssystem durch diesen Block, der, üblicherweise elektrisch, aufgeheizt ist. Da die Leitungswege im Heissläuferblock relativ lang sind, ist ersichtlich, dass den thermischen Verhältnissen, wie der Wärmeaufnahme durch das fliessende Material von der Heissläuferleitungswandung, Beachtung zu schenken ist.

Bei herkömmlichen Herstellungsverfahren mit solchen Heissläufern ist es nicht selten, auch bei Einhaltung exakt gleicher Leitungslängen von einer zentralen Materialzuspeisung zum Heissläufer bis zu den verschiedenen Kavitäten einerseits, und je nach Material und Hersstellungsverhältnissen anderseits, an den so gleichzeitig gebildeten Vorformlingen Acetaldehydanteile von bis zu 4 bis 5 »g/l zu registrieren, wobei die Verteilung des Acetaldehydanteils für die verschiedenen, gleichzeitig hergestellten Vorformlinge in grossen Bereichen variieren kann. Massgebend für die Serieproduktion derartiger Vorformlinge ist aber der Acetaldehydanteil desjenigen Vorformlings, der den höchsten Anteil aufweist. Eine nachmalige Selektion diesbezüglich genügender und ungenügender Vorformlinge ist kaum realisierbar und wenn, mit sehr hohem Aufwand.

Somit ist es eine weitere Aufgabe der vorliegenden Erfindung, die Verhältnisse zwischen Material und Heissläufer gezielt zu beeinflussen, derart, dass insbesondere die hitzeeinwirkungsabhängige Bildung von Komponenten im Material, insbesondere von Acetaldehyd, gesenkt wird.

Dies wird erfindungsgemäss nach dem Wortlaut von Anspruch 2 erreicht. Dabei wird davon ausgegangen, dass dann, wenn der Materialstrom so durch das Verteilleitungssystem fliesst, dass im wesentlichen gleiche Materialanteile des Stromes während wesentlichen Anteilen der Verweilzeit im Heissläufer im Bereiche der Heissläuferleitungswände verweilen, diese, sei dies durch Reibung, sei dies durch Wärmefluss, anders und mit einiger Wahrscheinlichkeit stärker erhitzt werden als die im Materialstrom zentral vorfliessenden Materialanteile. Durch Erzeugung der erwähnten radialen Austauschströmung wird bewirkt, dass, je nach Geschwindigkeit dieser Austauschströmung, immer wieder andere Materialanteile in den besagten Bereich getrieben werden und somit die gemittelte Verweilzeit von Materialanteilen in diesem Bereich während der Durchlaufzeit durch den Heissläufer reduziert wird.

Eine weitere Lösung der eben genannten Aufgabe ergibt sich auch bei Vorgehen nach Anspruch 3.

Zur Lösung der weiter oben erwähnten Aufgabe, nämlich die Materialcharakteristika zu homogenisieren, ist vorzugsweise eine möglichst gute Durchmischung des Materials anzustreben, wobei die Durchmischungsrichtung nicht massgebend ist. Somit kann hier durchaus eine Durchmischung entlang der Vorförderung des Materials durch Verwirbelung in Axialschnitten erfolgen. Eine Lösung der letzterwähnten Aufgabe, nämlich die Bildung hitzeeinwirkungsabhäniger Komponenten zu senken, wird auch durch eine Durchmischung erzielt, aber diesmal unter der Zusatzbedingung des Auftretens radialer Austauschströmungen. Deshalb wird bevorzugterweise vorgeschlagen, nach dem Wortlaut von Anspruch 4 vorzugehen, nämlich die Durchmischung zur Lösung der ersten Aufgabe so vorzunehmen, dass dadurch eine radiale Austauschströmung entsteht, und dass insbesondere noch eine zusätzliche Temperaturhomogenisierung durch Erzeugung radialer Wärmeleitung erzielt wird.

Obwohl auch eine örtlich begrenzte Durchmischung bzw. Erzeugung der genannten Strömung bzw. Temperaturhomogenisierung zu einer Verbesserung der Homogenität und/oder Verringerung der Anteile hitzeeinwirkungsabhängiger Komponenten führt, wird weiter vorgeschlagen, gemäss Anspruch 5 vorzugehen. Dies kann im Leitungssystem vor dem Heissläufer bzw. der Verteilung im Heissläufer oder beiderorts erfolgen.

Ausführungsvarianten sind in den Ansprüchen 6 bis 9 spezifiziert, eine heute bevorzugte in Anspruch 7.

Gemäss den bereits diskutierten Erkenntnissen wird nun ein Leitungsabschnitt für die gezielte Beeinflussung der Strömung eines flüssigen oder viskösen Gutes vorgeschlagen, wie er in Anspruch 10 spezifiziert ist.

Bevorzugte Ausführungsvarianten dieses Leitungsabschnittes sind in den Ansprüchen 11 und 12 spezifiziert, wobei die in Anspruch 12 spezifizierte derzeit bevorzugt ist.

Unter Berücksichtigung, dass in vielen Fällen das Leitungssystem für das flüssige oder visköse Gut an sich gegeben ist und es nicht erwünscht ist, dieses Leitungssystem an sich zu ändern, wird gemäss Anspruch 13 ein Einsatzteil zur Bildung eines Leitungsabschnittes erfindungsgemäss vorgeschlagen, welcher ohne weiteres in bestehende Leitungen eingebaut werden kann.

Ein Heissläuferblock, bei welchem die im Zusammenhang mit der Herstellung von Vorformlingen aus PET-Material diskutierte Aufgaben gelöst werden, zeichnet sich nach dem Wortlaut von Anspruch 15 aus, bevorzugte Ausführungsvarianten dieses Blocks nach den Ansprüchen 16 bis 21 sowie 23.

Im weiteren schlägt die vorliegende Erfindung gemäss Anspruch 22 einen 32er oder grösseren Satz gleichzeitig hergestellter Vorformlinge aus PET-Material vor, bei welchem der Acetaldehydanteil in demjenigen Vorformling, mit dem höchsten Anteil, mindestens 30% tiefer ist als in einem gleichen Satz unter gleichen Bedingungen hergestellter Vorformlinge, jedoch ohne die kennzeichnenden Massnahmen gemäss den oben abgehandelten Ansprüchen 1 bis 9.

Die Erfindung bzw. Erfindungen werden anschliessend beispielsweise anhand von Figuren erläutert. Es zeigen:
- Fig. 1: perspektivisch eine erste Ausführungsvariante eines erfindungsgemässen Leitungsabschnittes zur Durchmischung eines durchfliessenden Gutes bei gleichzeitiger Erzeugung einer radialen Ausgleichsströmung,
- Fig. 2: zwei schematische Querschnittsdarstellungen durch Abschnitte des Leitungsabschnittes gemäss Fig. 1,
- Fig. 3: eine weitere Ausführungsvariante des erfindungsgemässen Leitungsabschnittes,
- Fig. 4 a - d: eine Mehrzahl Aufbauvarianten erfindungsgemässer Leitungsabschnitte zur Erzeugung einer Durchmischung, Anregung einer radialen Austauschströmung und allenfalls zur Temperaturhomogenisierung im vorfliessenden Materialstrom, wobei Fig. 4c die im Moment bevorzugte Ausführungsvariante zeigt,
- Fig. 5: einen Bauteil zum Aufbau eines erfindungsgemässen Leitungsabschnittes gemäss Fig. 4c,
- Fig. 6a: eine Teilaufsicht auf die Heissläuferplatte eines Heissläuferblocks,
- Fig. 6b: eine Schnittdarstellung gemäss Linie VI-VI von Fig. 6a,
- Fig. 7: eine schematische Darstellung der Anordnungsmöglichkeit eines statischen Mischers entlang des Leitungssystems einer Heissläuferplatte gemäss Fig. 6a bzw. ihr vorgeschaltet,
- Fig. 8: eine bevorzugte Ausführungsvariante einer erfindungsgemässen Heissläuferplatte zur Durchmischung des vorströmenden Gutes, Anregung radialer Ausgleichsströmungen und zur Erzielung einer Temperaturhomogenisierung über selektionierte Strömungsquerschnitte.

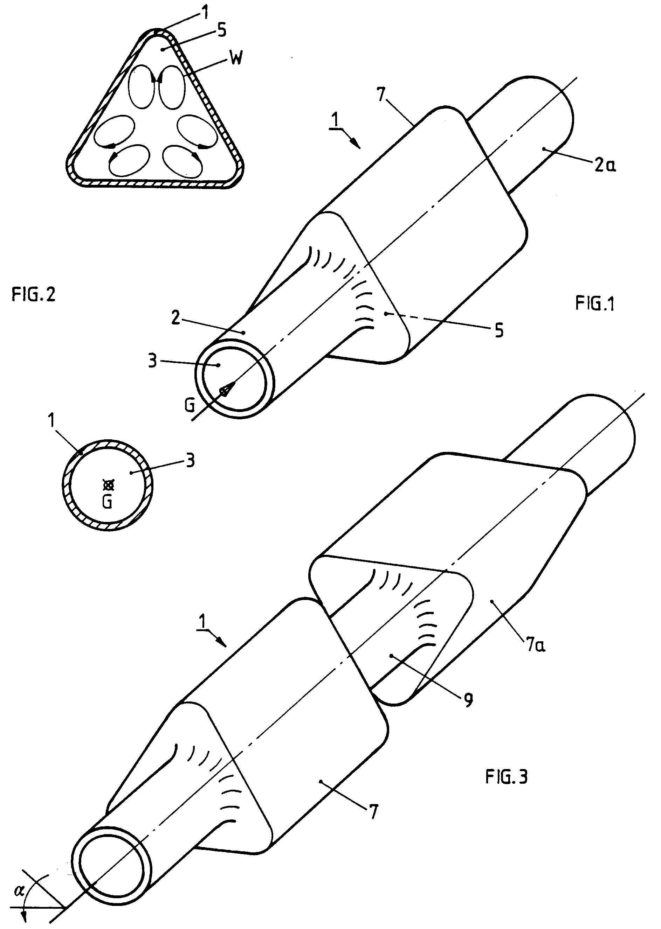

In Fig. 1 ist perspektivisch eine erste Ausführungsvariante eines erfindungsgemässen Leitungsabschnittes 1 dargestellt. Er umfasst einen primär rohrförmigen Stutzen 2 mit kreisrundem Innenquerschnitt 3. Der Stutzen 2 geht in einen Teil 7 über, dessen Innenquerschnittsfläche von der kreisrunden Form wesentlich abweicht, wie beispielsweise gezeigt, und hier bevorzugterweise eine dreieckförmige Innenquerschnittsfläche 5 aufweist. Schematische Schnittdarstellungen durch eine Partie mit kreisrundem Innenquerschnitt 3 und eine Partie mit dreieckförmigem 5 sind in Fig. 2 wiedergegeben.

Fliesst ein flüssiges oder visköses Gut G durch eine Leitung mit kreisförmigem Querschnitt, wie durch den Stutzen 3, so entsteht, bei laminarer Strömung, eine reine Parallelströmung, bei turbulenter Strömung eine Strömung mit Wirbelbildung, vor allem im Grenzschichtbereich an der Wandung der Leitung.

Bei dem hier auch und insbesondere interessierenden PET-Material entsteht bei dessen Vorförderung, z.B. in einem Heissläuferblock, eine laminarähnliche Strömung, bei der die Geschwindigkeit der Strömung im Wandungsbereich sehr langsam, aber nicht Null ist.

In einer Leitung mit einem von der Kreisform wesentlich abweichenden Strömungsquerschnitt, wie dem Dreieckströmungsquerschnitt 5, ergeben sich zusätzlich Sekundärwirbel, im Falle der Dreiecksform wie sie in Fig. 2 rechts schematisch eingezeichnet und mit W bezeichnet sind.

Durch Vorsehen der in Fig. 2 dargestellten Leitungsquerschnittsformen ergibt sich somit eine zusätzliche Verwirbelung des im Abschnitt 2 mit dem kreisrunden Querschnitt 3 im wesentlichen, und abgesehen von Primärwirbeln einer turbulenten Strömung, achsparallel zufliessenden Materials. Die Anregung zur Bildung der Wirbel W bewirkt mit den dargestellten, höchst einfachen Vorkehrungen eine Durchmischung des Gutes G mit teilweise radialer Austauschströmung. Wie aus Fig. 2 rechts ersichtlich, wird dabei der Materialstrom G, betrachtet über seinen ganzen Strömungsquerschnitt, unterschiedlich intensiv angeregt, indem Wirbel um diskret verteilte Wirbelzentren angeregt werden.

Eine weitere Verbesserung der Durchmischung wird erzielt, indem der Abschnitt 2 mit kreisförmigem Innenquerschnitt, wie erwähnt, erst in einen Abschnitt 7 mit dreieckförmigem übergeht und darnach wieder in einen Abschnitt 2a mit wiederum kreisförmigem Innenquerschnitt, in welchem nun die Wirkung der angeregten Wirbel W im Materialstrom G zu einer Homogenisierung der Durchmischung über den Gesamtströmungsquerschnitt des Materials G führt.

Gemäss Fig. 3 werden in einer zweiten Ausführungsvariante des erfindungsgemässen Leitungsabschnittes, vorzugsweise getrennt durch einen Zwischenabschnitt 9 mit kreisförmigem Innenquerschnitt, zwei oder mehrere Abschnitte 7, 7a, ... hintereinandergeschaltet. Dabei werden diese Abschnitte 7, 7a, entweder mit voneinander abweichenden Innenquerschnittsformen ausgebildet, oder, wie in Fig. 3 dargestellt, mit grundsätzlich gleichen, die jedoch in Azimutalrichtung α verschoben sind. Dadurch werden nacheinander Sekundärwirbel entsprechend W von Fig. 2 angeregt, mit unterschiedlicher Anzahl Wirbelzentren oder mit gleicher Anzahl azimutal verschobener Wirbelzentren, was eine weitere Erhöhung der Durchmischung im Vergleich zu der mit der Ausführungsvariante gemäss Fig. 1 realisierten mit sich bringt.

Der in den Fig. 1 bis 3 dargestellte erfindungsgemässe Leitungsabschnitt, bei dem eine gezielte Beeinflussung der Strömung eines flüssigen oder viskösen Gutes realisiert wird, nämlich dadurch, dass man lokal den Leitungsquerschnitt von einer Kreisform in eine davon abweichende, insbesondere Dreieckform, ändert, eignet sich als separat fertigbares Bauelement, eignet sich jedoch weniger zum Einsatz an bereits aufgebauten, in ihrer Ausdehnung nicht veränderbaren Leitungssystemen.

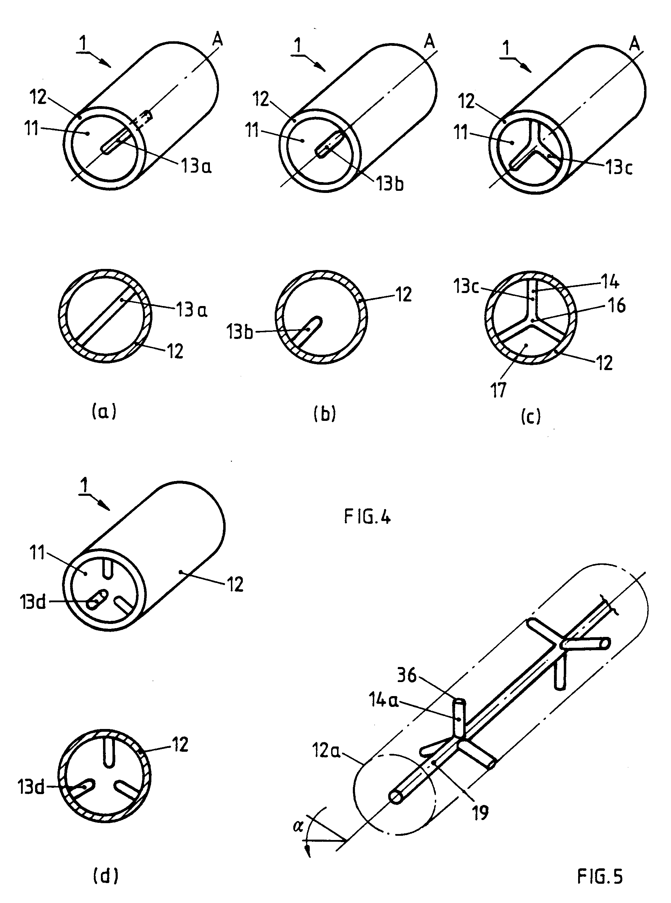

In Fig. 4 (a) bis (d) sind nun vier Beispiele von Leitungsabschnitten dargestellt, bei denen die im wesentlichen kreisförmige Aussenkontur der Innenquerschnittsfläche 11 aufrechterhalten bleibt, womit sich so ausgebildete erfindungsgemässe Leitungsabschnitte auch eignen, an bestehenden Systemen eingebaut zu werden. Hier wird die von der Kreisform wesentlich abweichende Kontur, analog zur Dreieckquerschnittsform 5 gemäss Fig. 2, durch Unterteilung des kreisförmigen Querschnittes 11 realisiert.

Gemäss Fig. 4a wird hierzu ein in seiner Ausdehnung in Richtung der Leitungsachse A begrenzter Strömungsteiler 13a quer und vorzugsweise zentral über den Querschnitt 11 verlaufend, vorgesehen. Gemäss Fig.4b wird die Innenquerschnittsfläche 11 durch einen Strömungsteiler 13b geteilt, der nicht durch den ganzen Querschnitt 11 durchragt, im Unterschied zur Ausführung gemäss Fig. 4a.

In Fig. 4c ist eine bevorzugte Ausbildung eines Teilers 13c dargstellt. Durch ihn wird die kreisförmige Querschnittsfläche 11 in Kreissektoren 17 unterteilt, vorzugsweise in drei gleich grosse. Bei dieser Ausführungsvariante, und im Unterschied zu derjenigen nach Fig. 4d, ragen die speichenförmigen Teilerstifte 14 bis ins Zentrum, wo sie in einem Bereich 16 miteinander verbunden sind. In Analogie zu den in den Fig. 1 und 3 dargestellten Ausführungsvarianten, umfasst nun ein nach Fig. 4 grundsätzlich aufgebauter Leitungsabschnitt 1 jeweils nur einen Abschnitt mit Querschnittsteilung, umfasst aber bevorzugterweise und in Analogie zu Fig. 3, mehrere hintereinander geschaltete gleiche oder unterschiedliche Teileranordnungen gemäss den Fig. 4a bis d. Bei der bevorzugten Ausführungsform nach Fig. 4c werden zwei oder mehrere Dreispeichensätze, azimutal versetzt, hindereinander und mit vorgegebenem Abstand am Leitungsabschnitt vorgesehen.

Die gemäss Fig. 4 aufgebauten Leitungsabschnitte lassen sich, wie erwähnt, ohne weiteres im Rahmen bestehender Leitungssysteme einordnen. Dabei können die Teiler 13a bis 13c mit dem Aussenmantel 12 einteilig ausgebildet sein, oder es kann bevorzugterweise ein Einsatzteil zur Bildung des Strömungsteilers hergestellt und eingebaut werden. Dies senkt einerseits die Herstellungskosten, erhöht andererseits die Einsatzflexibilität und erlaubt insbesondere bestehende Leitungssysteme durch Einbau eines solchen Einsatzteiles zu dem erfindungsgemässen Leitungsabschnitt umzugestalten. Ein solcher Einsatzteil, dessen Einbau in eine bestehende Leitung 12a zu einem Leitungsabschnitt nach Fig. 4c führt, ist in Fig. 5 dargestellt. Er weist einen sich axial erstreckenden Träger 19 auf, woran, axial mit Abstand, Speichen 14a, vorzugsweise deren drei und vorzugsweise in einer Ebene gleich verteilt, vorragen. Dabei sind bevorzugterweise zwei oder mehrere derartige Speichensätze hintereinander geschaltet, und zwar so, dass ihre Speichen in Azimutalrichtung α versetzt sind, mit Bezug auf die Speichen 14a benachbarter Speichensätze.

Gemäss Fig. 5 sind die Speichen der hier dargestellten zwei Sätze um 60° azimutal verschoben.

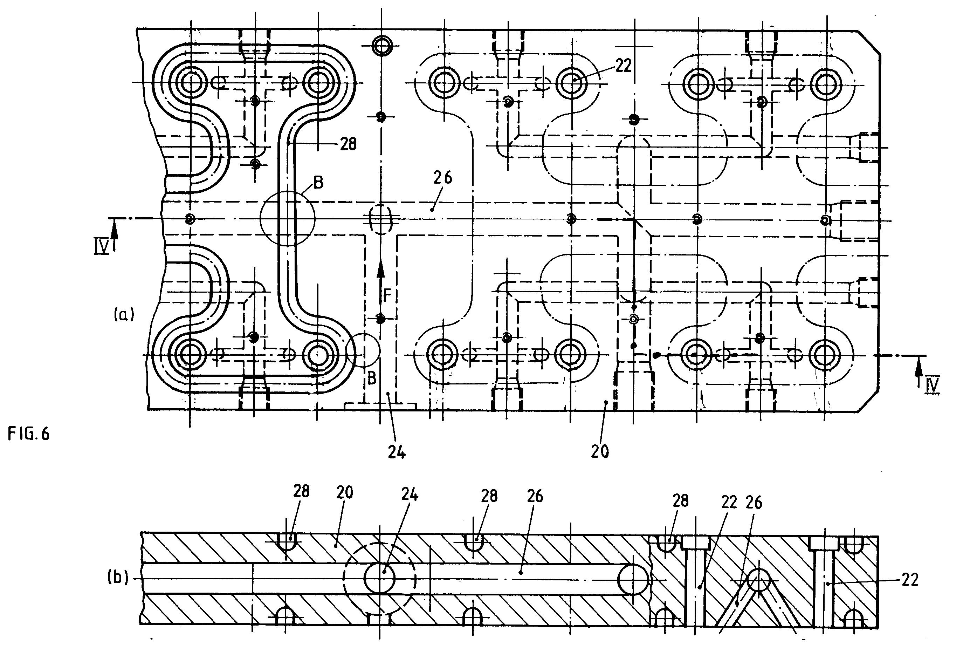

In Fig. 6 sind eine Aufsicht (a) und ein Querschnitt (b) durch eine Heissläuferplatte 20 eines Heissläuferblocks derjenigen Bauart dargestellt, wie sie von der Firma Otto Hofstetter AG, 8730 Uznach, Schweiz entwickelt wurde und vertrieben wird.

Derartige Heissläuferplatten, welche durch beidseitiges Aufbringen von Abdeckplatten zum Heissläuferblock komplettiert werden, werden für die gleichzeitige Herstellung von Vorformlingen aus einem PET-Material eingesetzt. Die Heissläuferplatte 20 weist eine Anzahl Austrittsöffnungen 22 auf, zur Herstellung von beispielsweise 32 Vorformlingen, gleichzeitig 32 derartige Austrittsöffnungen 22. Auf diese Austrittsöffnungen 22 wird die Form für die Vorformlinge montiert, was hier nicht dargestellt ist, da diese Formen nicht Gegenstand der vorliegenden Erfindung sind.

Die Heissläuferplatte 20 weist einen zentralen Einlass 24 auf, von welchem aus sich, mit gleichen Längen, Verteilkanäle 26 zu den Austrittsöffnungen 22 erstrecken, bzw. in deren unmittelbaren Bereich führen, wenn die Vereinigung dieser Verteilkanäle 26 mit der Vorformlingsform erst an der Heissläuferplatte 20 in Flussrichtung F nachgeschalteten Organen erfolgt. Durch den Einlass 24 und die Verteilkanäle 26 wird geschmolzenes PET-Material gegen die Austrittsöffnungen 22 und schliesslich zu den Vorformlingsformen (nicht dargestellt) getrieben.

Das PET-Material wird dabei heiss vorgefördert und eine Abkühlung beim Durchlaufen der Heissläuferplatte 20 durch Vorsehen mäanderförmig verteilter Heizspiralen 28 an beiden Oberflächen der Heissläuferplatte 20 verhindert. Die Heizspiralen 28 werden elektrisch betrieben.

Wie einleitend erwähnt, ist bei einer solchen Verarbeitung von PET-Material seiner Erwärmung höchste Beachtung zu schenken. Ist das vorgeförderte PET-Material auch nur lokal zu wenig warm, so bilden sich dort Bezirke mit einem erhöhten kristallinen Anteil. Ist anderseits das Material zu stark erwärmt, auch nur lokal, so ergibt sich dort eine erhöhte Bildung von Acetaldehyd. Bilden sich aber durch lokal ungenügende Erwärmung Bezirke mit erhöhtem kristallinen Anteil und treten derartige Bezirke an einer Vorformlingsform, koaxial mit den Austrittsöffnungen 22, aus, so ergeben sich an dem dort gefertigten Vorformling möglicherweise opake Schlieren.

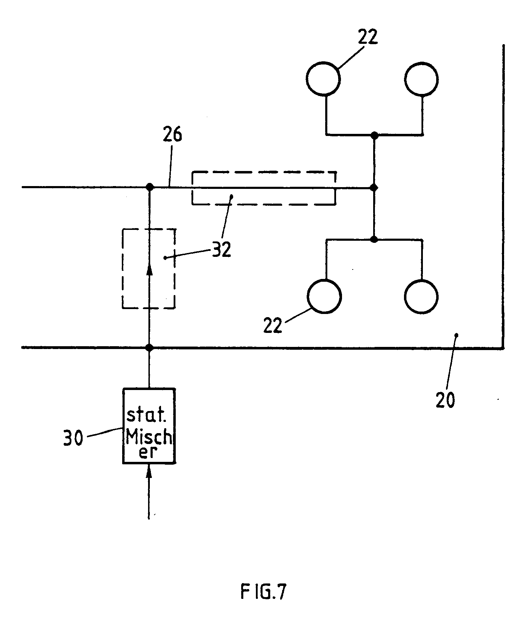

Um zu erreichen, dass kaum vermeidbare Bereiche mit erhöhtem kristallinen Anteil in der ansonsten amorphen PET-Masse, lokal konzentriert an der einen oder andern Austrittsöffnung 22 austreten, wird gemäss Fig. 7, in welcher, ausgehend von der Darstellung von Fig. 6, schematisch das Verteilnetz der Kanäle 26 zu den Oeffnungen 22 an der Heissläuferplatte 20 dargestellt ist, grundsätzlich ein statischer Mischer vorgesehen. Dies kann, wie mit 30 in Fig. 7 dargestellt, bereits vor der Heissläuferplatte 20 vorgenommen werden und/oder, wie schematisch gestrichelt bei 32 dargestellt, entlang der Verteilkanäle 26 in der Heissläuferplatte 20.

Insbesondere beim Vorschalten eines statischen Mischers 30 können dabei erfindungsgemäss bekannte statische Mischer, wie von der Firma Sulzer gefertigt, eingesetzt werden.

Bevorzugterweise wird aber die Durchmischung mindestens nicht nur vor der Heissläuferplatte 20 vorgenommen, sondern, wie eben gestrichelt bei 32 dargestellt, entlang der Verteilkanäle 26, wozu sich bekannte statische Mischer, z.B. aus Dimensions-und Strömungswiderstandsgründen, nicht oder mindestens nur wenig eignen.

Wie bereits erläutert, ergibt sich aber auch bei zu hohen PET-Materialtemperaturen ein Problem, nämlich, dass sich mindestens lokal zuviel Acetaldehyd bildet. Insbesondere bei der Herstellung von Vorformlingen, die nachmals zu Flaschen für Mineralwasser blasgereckt werden, ist der Minimalisierung des Acetaldehydanteils höchste Beachtung zu schenken, denn diese Substanz beeinträchtigt bereits in geringen Konzentrationen das Mineralwasserfüllgut.

Die Heissläuferplatte 20, wie in Fig. 6a dargestellt, bildet eigentlich eine Heizungsoberfläche, entsprechend den Oberflächen der Verteilkanäle 26, entlang welcher das heisse PET-Material vorgefördert wird. Streichen nun Materialstrombezirke während wesentlichen Anteilen ihres Gesamtströmungsweges durch die Kanäle 26 entlang der Leitungswände der Kanäle 26, so werden sie, sei dies aus Gründen der Reibung oder sei dies aus Gründen einer relativ langen Wärmeaufnahmemöglichkeit, entlang ihres Weges, stärker erwärmt als im Strom zentral vorgeförderter Materialbezirke: Es entstehen in den ersterwähnten Bezirken erhöhte Acetaldehydanteile. Auch bei lokal immer wieder entlang der Kanäle 26 auftretender Verwirbelung, durch die vorgesehenen Abzweigungen und Krümmer, werden derartige Bezirke nicht in dem Sinne homogenisiert, dass sich ihr Acetaldehydanteil über den gesamten Materialstrom ausgliche, sondern sie bleiben weitgehendst konzentriert und treten schliesslich an einer oder mehreren der Oeffnungen 22 zu einer den zugeordneten Vorformlingsformen aus. Dadurch ergeben sich, betrachtet über alle Vorformlingsformen und schliesslich über alle daran gleichzeitig hergestellten Vorformlinge, an den einen oder anderen wesentlich erhöhte Acetaldehydanteile. Auch wenn nur ein einziger Vorformling einen derart erhöhten Acetaldehydanteil aufweist, was nicht immer am gleichen Vorformling, bezogen auf die Austrittsöffnungen 22, der Fall zu sein braucht, so kann eine derartige Produktion für kritische Füllgüter, wie Mineralwasser, nicht verwendet werden. Dieses Problem wird nun insbesondere entlang wesentlicher Partien der Verteilkanäle 26 dadurch gelöst, dass man das vorströmende PET-Material zu einer radialen Ausgleichsströmung anregt, womit erreicht wird, dass auch in Abschnitten gerader Leitungsführungs/Materialbezirke während nur kürzerer Zeiten im Bereich der Kanalleitungswände vorfliessen, weil sie durch die radiale Ausgleichsströmung immer wieder ins Zentrum der Strömung bewegt werden.

Eine derartige radiale Ausgleichsströmung kann nun durchaus durch Einsatz von Leitungsabschitten, wie sie in den Fig. 1 bis 3 dargestellt und besprochen wurden, realisiert werden. Wie in Fig. 2 dargestellt, ergibt sich dadurch die erwünschte radiale Ausgleichsströmung mit der Verwirbelung W. Durch diese radiale Ausgleichsströmung, primär zur Reduzierung der Verweilzeiten von Materialstrombezirken am Wandungsbereich der Verteilkanäle 26, wird eine Durchmischung des vorgeförderten PET-Materials erreicht, womit sich auch gleichzeitig eine Homogenisierung des Materials bezüglich seines Kristallisationsgehaltes ergibt. Wiewohl sich die Leitungsabschnitte gemäss Fig. 1 bis 3 ohne weiteres eignen, um vor der Heissläuferplatte 20 als statische Mischer 30 gemäss Fig. 7 eingesetzt zu werden, bedingt ihr Vorsehen entlang der Verteilkanäle 26 der Heissläuferplatte 20 einerseits bauliche Aenderungen bestehender Heissläuferplatten und anderseits einen relativ grossen Herstellungsaufwand für die Herstellung der Verteilkanäle 26 in der üblicherweise aus Stahl bestehenden Heissläuferplatte 20. Hingegen eignen sich Leitungsabschnitte, wie sie anhand von Fig. 4 bzw. 5 vorgestellt wurden, für die Erzeugung einer radialen Ausgleichsströmung und einer Durchmischung ausgezeichnet, und ergeben einen weiteren, möglicherweise auch ausschlaggebenden Effekt, wie noch besprochen wird.

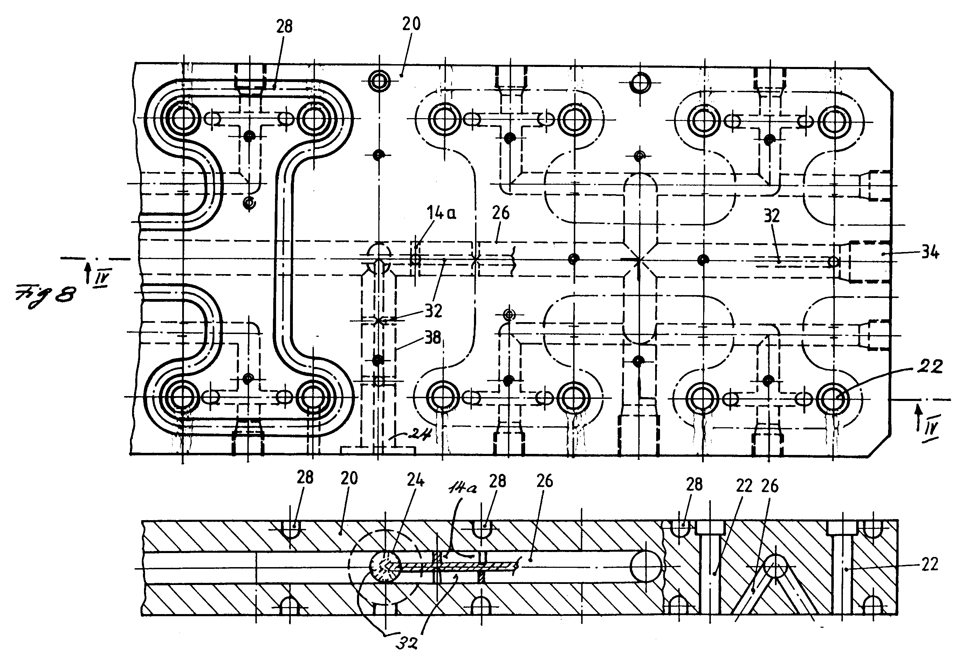

In Fig. 8 ist eine bevorzugte Ausbildungsvariante eines derartigen erfindungsgemässen Heissläuferblocks mit seiner Heissläuferplatte 20 dargestellt. Dabei wird bevorzugterweise ein Bauteil, wie es in Fig. 5 dargestellt ist, eingesetzt. Wie ersichtlich, werden vorzugsweise entlang wesentlicher Längenabschnitte der Verteilkanäle 26 Bauteile, wie sie in Fig. 5 dargestellt sind, eingebaut, wie in Fig. 8 beispielsweise dargestellt und hier mit der Positionsnummer 32 bezeichnet. Dabei werden diese Bauteile gemäss Fig. 5, vorzugsweise mit azimutal gestaffelten Speichen 14a, axial beispielsweise mittels Stopfen 34 in den Kanälen 26 gehaltert.

Aus folgendem Grund werden diese Bauteile 32 für den hier gezeigten Einsatz vorzugsweise aus einem gut wärmeleitenden Material, vorzugsweise aus Stahl, gefertigt, und es wird auch die bevorzugte Form, analog zu der in Fig. 4c dargestellten, mit Axialsteg 19 gemäss Fig. 5 eingesetzt: Wie aus den Fig. 6 und 8 ersichtlich, weisen die Heizmäander 28 bezüglich gewisser Abschnitte der Verteilkanäle 26 wesentlich kleinere Abstände auf als bezüglich anderer. Bereiche mit derartig kleinen Abständen sind in Fig. 6a beispielsweise eingekreist und mit B bezeichnet. Nun ist zu beachten, dass die Temperaturverteilung in der Heissläuferplatte 20 wohl nach entsprechend langer Betriebszeit stationär ist, jedoch keinesfalls homogen, indem die Temperaturverteilung von den Heizmäandern 28 als Wärmequellen, gegen die Ränder der Heissläuferplatte 20 abnimmt, wo sie den dortigen Randbedingungen genügen muss. Somit sind insbesondere im Bereiche, wie sie mit B in Fig. 6a bezeichnet sind, die Kanalwände der Kanäle 26 wärmer als an Stellen mit grösseren Abständen von den Heizmäandern 28. Daraus folgt, dass die dort auch bei Verwirbelung und angeregter axialer Ausgleichsströmung im Bereich der Kanalwände liegenden Materialstrombereiche höheren Temperaturen ausgesetzt sind und sich dort lokal vermehrt Acetyldehyd bilden kann. Um insbesondere in solchen Bereichen eine Homogenisierung des Materialstromes, was die zugeführte Wärmemenge bzw. seine Temperatur anbelangt, zu erreichen, werden bevorzugterweise die aus Metall, wie Stahl, gefertigen Bauteile gemäss Fig. 5 so angeordnet, dass sie gemäss Fig. 8 insbesondere an solchen, den Heizmäandern nächstgelegenen Kanalbereichen die Wärme von den Kanalwänden nach innen in den Materialstrom leiten. Indem die Stirnflächen 36 gemäss Fig. 5 exakt auf die Innenwände der Kanäle angepasst werden und damit ein guter Wärmeübergang, allenfalls durch Pressitze erstellt wird, wird ein solcher Wärmefluss von der Kanalwand ins Innere des vorfliessenden PET-Materials erreicht. Damit ergibt sich eine wesentliche Reduktion der Acetaldehydanteile in demjenigen Vorformling des gleichzeitig erzeugten Vorformlingssatzes, mit dem höchsten Acetaldehydanteil.

Nachfolgend sind tabellenförmig die Azetaldehydwerte an 32 gleichzeitig hergestellten Vorformlingen ohne Einbau von Elementen, die eine radiale Ausgleichsströmung sowie eine Temperaturhomogenisierung bewirken, insbesondere ohne Einbau eines Elementes, wie es in Fig. 5 dargestellt ist, nur im Leitungsabschnitt 38 gemäss Fig. 8 zusammengestellt, darunter Messwerte an einem gleichzeitig hergestellten 32-er-Vorformlingssatz, der unter gleichen Bedingungen, jedoch mit einem Bauteil gemäss Fig. 5 im Abschnitt 38 erzeugt wurde.

Daraus ist ersichtlich, dass bereits das Vorsehen eines wie erläutert ausgebildeten Bauteils im Kanalabschnitt 38 zu einer 30%-igen Reduktion des Acetaldehydanteils im Acetaldehydanteilspitzenreiter der Vorformlinge bewirkt.

**Tabelle 1**

| | | | |
|---|---|---|---|
| 2.61 | 2.73 | 2.96 | 2.72 |
| 2.30 | - | 3.12 | 2.93 |
| 2.81 | 2.89 | 3.51 | 2.78 |
| - | 4.04 | 4.11 | 2.56 |
| 3.05 | 3.86 | 4.39* | 3.14 |
| 2.84 | 3.04 | 3.50 | 2.93 |
| 2.88 | 3.02 | 3.15 | 2.76 |
| 2.67 | 2.84 | 2.95 | 2.82 |
| in »g/l | | | |

| | | | |
|---|---|---|---|
| * : Max-Wert | | | |

**Tabelle 2**

| | | | |
|---|---|---|---|
| 1.94 | 2.15 | 2.08 | 1.95 |
| 2.05 | 2.18 | 2.26 | 1.98 |
| 1.87 | 2.35 | 2.18 | 2.07 |
| 2.17 | 2.96 | 2.77 | 1.93 |
| 2.13 | 3.09* | 2.85 | 1.86 |
| 1.96 | 2.38 | 2.34 | 2.08 |
| 2.05 | 2.23 | 2.19 | 1.87 |
| 1.95 | 2.10 | 2.10 | 1.98 |
| in »g/l | | | |

| | | | |
|---|---|---|---|
| * : Max-Wert | | | |

Absolut betrachtet, lassen sich mit modernen Extruderschnecken-Anlagen, dem Heissläufer vorgeschaltet, tiefere Acetaldehydanteile erhalten. Die relative Relation, Werte mit Bauteil gemäss Fig. 5/Werte ohne dieses Bauteil, bleibt aber gültig.

## Patentansprüche

1. Verfahren zur gleichzeitigen Herstellung von mehreren Vorformlingen aus einem Kunststoffmaterial, insbesondere aus PET, bei dem das Material viskös unter Druck von einem Heissläuferblock (20), an mehrere Kavitäten mit der Form der Vorformlinge verteilt wird, und zur Gewährleistung möglichst gleicher Charakteristika des den Kavitäten zugeführten Materials letzteres im Heissläuferblock (20) zusätzlich durchmischt wird, dadurch gekennzeichnet, dass die Verweilzeit von Materialanteilen im Bereich der Heissläuferleitungswände während der Zuspeisung zu den Kavitäten durch Anregung einer radilen Austauschströmung im Materialstrom reduziert wird, und die Temperaturverteilung über den Materialstromquerschnitt durch Erzeugung radialer Wärmeleitung homogenisiert wird, um die hitzeeinwirkungsabhängige Bildung von Acetaldehyd zu senken.

2. Verfahren nach Anspruch 1, dadurch gekennzeichnet, dass die Durchmischung durch die radiale Austauschströmung und die Temperaturhomogenisierung durch Erzeugung einer radialen Wärmeleitung über dem Materialstromquerschnitt erzielt wird.

3. Verfahren nach Anspruch 1, dadurch gekennzeichnet, dass durch lokale Unterteilung der Strömungsquerschnitt, vorzugsweise in drei gleiche Sektoren unterteilt wird.

4. Verfahren nach Anspruch 3, dadurch gekennzeichnet, dass stromabwärts der lokalen Unterteilung die Strömung in einen Abschnitt mit im wesentlichen kreisförmigem Strömungsquerschnitt übergeführt wird.

5. Verfahren nach Anspruch 4, dadurch gekennzeichnet, dass axial gestaffelt unterschiedliche oder azimutal versetzte lokale Unterteilungen des Strömungsquerschnitts vorgesehen werden.

6. Leitungsabschnitt für die gezielte Beeinflussung der Strömung eines flüssigen oder viskösen Gutes, in einem Heissläuferblock, dadurch gekennzeichnet, dass er mindestens an einer Stelle seiner Axialausdehnung mindestens einen im wesentlichen radial ausgerichteten Strömungsteiler aufweist, der zur Homogenisierung der Temperatur im Gut, aus einem thermisch gut leitenden Material besteht.

7. Leitungsabschnitt nach Anspruch 6, dadurch gekennzeichnet, dass axial gestaffelt mindestens zwei azimutal versetzte Strömungsteiler vorgesehen sind.

8. Leitungsabschnitt nach Anspruch 6, dadurch gekennzeichnet, dass der Strömungsteiler speichenartig und azimutal gleich verteilt ist.

9. Einsatzteil zur Bildung eines Leitungsabschnittes nach einem der Ansprüche 6 bis 8, dadurch gekennzeichnet, dass er mindestens einen Satz radialer zentral verbundener Teilerelemente, vorzugsweise einen Speichensatz umfasst, und zur Temperaturhomogenisierung, vorzugsweise aus Metall gefertigt ist.

10. Einsatzteil nach Anspruch 9, dadurch gekennzeichnet, dass er mindestens zwei azimutal versetzte Speichensätze umfasst, die zentral auf Abstand von einander verbunden sind.

11. Heissläuferblock mit einem Strömungsteiler, dadurch gekennzeichnet, dass der Strömungsteiler speichenartig ausgebildet ist und vorzugsweise azimutal gleich ver teilte Speichen umfasst, vorzugsweise drei azimutal gleich verteilte.

12. Heissläuferblock nach Anspruch 11, dadurch gekennzeichnet, dass axial versetzt mindestens zwei Strömungsteiler mit azimutal versetzten Speichen vorgesehen sind.

13. Heissläuferblock nach Anspruch 11, dadurch gekennzeichnet, dass axial auf Abstand entlang wesentlicher Längenabschnitte des Systems speichenartige Strömungsteiler vorgesehen sind, wobei sich jeweils folgende Strömungsteiler azimutal versetzt sind.

14. Heissläuferblock nach einem der Ansprüche 11 bis 13, dadurch gekennzeichnet, dass wärmeleitende Strömungsteiler mindestens dort angeordnet sind, wo der Abstand zwischen Heizelementen des Blocks und Verteilleitung kleiner als an anderen Stellen des Leitungssystems ist.

## Claims

1. Process for the simultaneous production of several preforms from a plastic material, in particular from PET, in which the viscous material is distributed under pressure from a hot runner block (20) to several cavities having the shape of the preforms, and, to ensure as far as possible identical characteristics of the material fed to the cavities, said material is additionally mixed in the hot runner block (20), characterized in that the residence time of parts of the material in the region of the hot runner pipe walls during the feed to the cavities is reduced by stimulating a radial exchange flow in the material flow, and the temperature distribution over the material flow cross-section is homogenized by generating radial heat conduction in order to reduce the formation of acetaldehyde dependent on the action of heat.

2. A process according to Claim 1, characterized in that the mixing is achieved by the radial exchange flow and the temperature homogenization is achieved by generating radial heat conduction over the material flow cross-section.

3. Process according to Claim 1, characterized in that the flow cross-section is divided by local subdivision, preferably into three equal sectors.

4. Process according to Claim 3, characterized in that, downstream of the local subdivision, the flow is transferred to a section with essentially circular flow cross-section.

5. Process according to Claim 4, characterized in that different axially staggered or azimuthally staggered local subdivisions of the flow cross-section are provided.

6. Pipe section for controlling the flow of a liquid or viscous material in a hot runner block, characterized in that it has, at least at one point along its axial direction, at least one flow divider which is essentially radially oriented and, for homogenization of the temperature in the material, consists of a material having good thermal conduction.

7. Pipe section according to Claim 6, characterized in that at least two azimuthally staggered flow dividers are provided in an axially staggered arrangement.

8. Pipe section according to Claim 6, characterized in that the flow divider is distributed in the form of spokes and at equal azimuthal angles.

9. Insert part for the formation of a pipe section according to any of Claims 6 to 8, characterized in that it comprises at least one set of radial divider elements connected centrally, preferably a set of spokes, and is preferably made of metal for temperature homogenization.

10. Insert part according to Claim 9, characterized in that it comprises at least two azimuthally staggered sets of spokes which are connected centrally and are a distance apart.

11. Hot runner block having a flow divider, characterized in that the flow divider is in the form of spokes and preferably comprises azimuthally distributed spokes, preferably three azimuthally equally distributed spokes.

12. Hot runner block according to Claim 11, characterized in that at least two flow dividers having azimuthally staggered spokes are provided in an axially staggered arrangement.

13. Hot runner block according to Claim 11, characterized in that spoke-like flow dividers are provided axially a distance apart along substantial length sections of the system, successive flow dividers being azimuthally staggered in each case.

14. Hot runner block according to any of Claims 11 to 13, characterized in that heat-conducting flow dividers are arranged at least where the distance between heating elements of the block and the distribution pipe is smaller than at other points of the pipe system.

## Revendications

1. Procédé de fabrication en simultané de plusieurs préformes en matière plastique, en particulier en PET, dans lequel le matériau est distribué sous forme visqueuse sous pression d'un bloc de chauffage (20) à plusieurs cavités ayant la forme des préformes, et dans lequel, afin de garantir des propriétés si possible identiques du matériau, ce dernier est additionnellement mélangé dans le bloc de chauffage (20), caractérisé en ce que la durée de résidence des fractions de matière au niveau des parois des conduites du bloc de chauffage est réduite par une stimulation d'un flux d'échange radial dans le flux de matière, et que la distribution de la température sur la section du flux de matière est homogénéïsée par la génération d'une conduction de la chaleur en direction radiale, afin de réduire la formation d'aldéhyde acétique due à l'action de la chaleur.

2. Procédé selon la revendication 1, caractérisé en ce que le mélange dû au flux s'échange radial et l'homogénéïsation de la température sont obtenus par la formation d'une conduction de la chaleur radiale sur la section du flux de matière.

3. Procédé selon la revendication 1, caractérisé en ce que la section du flux de matière est divisée par une division locale en des secteurs identiques, de préférence trois.

4. Procédé selon la revendication 3, caractérisé en ce qu'en aval de la division locale, le flux est amené dans un tronçon présentant une section de flux de matière sensiblement circulaire.

5. Procédé selon la revendication 4, caractérisé en ce que différentes subdivisions locales, échelonnées axialement ou décalées azimutalement, de la section du flux sont prévues.

6. Tronçon de tube pour l'influence spécifique de l'écoulement d'un produit visqueux ou liquide, dans un bloc de chauffage, caractérisé en ce qu'il présente à au moins un endroit, pris dans sa direction axiale, au moins un séparateur de flux qui s'étend substantiellement en direction radiale et qui est réalisé en un matériau bon conducteur thermique afin d'homogénéïser la température dans le produit.

7. Tronçon de tube selon la revendication 6, caractérisé en ce qu'au moins deux séparateurs de flux échelonnés axialement et décalés azimutalement sont prévus.

8. Tronçon de tube selon la revendication 6, caractérisé en ce que le séparateur de flux est du type à rayons et présente une distribution azimutale uniforme.

9. Insert pour la formation d'un tronçon de tube selon l'une des revendications 6 à 8, caractérisé en ce qu'il comprend au moins un set d'éléments de séparations reliés centralement selon leur direction radiale, de préférence un set de rayons, qui sont réalisés de préférence en métal afin d'homogénéïser la température.

10. Insert selon la revendication 9, caractérisé en ce qu'il comprend au moins deux sets de rayons décalés azimutalement, reliés centralement à distance l'un de l'autre.

11. Bloc de chauffage avec un séparateur de flux, caractérisé en ce que le séparateur est du type à rayons et qu'il comprend de préférence des rayons distribués uniformément en direction azimutale, de préférence trois rayons distribués uniformément en direction azimutale.

12. Bloc de chauffage selon la revendication 11, caractérisé en ce qu'au moins deux séparateurs de flux décalés axialement, et présentant des rayons décalés azimutalement, sont prévus.

13. Bloc de chauffage selon la revendication 11, caractérisé en ce que des séparateurs du type à rayons sont prévus à distance les uns des autres le long de sections longitudinales substantielles du système, les séparateurs successifs étant décalés azimutalement les uns par rapport aux autres.

14. Bloc de chauffage selon l'une des revendications 11 à 13, caractérisé en ce que des séparateurs conducteurs de la chaleur sont disposés au moins aux endroits où la distance entre les éléments de chauffage des blocs et la conduite de distribution est plus petite qu'aux autres endroits de la tuyauterie.
